# EUROPÄISCHE PATENTSCHRIFT

(11) **EP 3 052 328 B1**
(45) Veröffentlichungstag und Bekanntmachung des Hinweises auf die Patenterteilung: **11.07.2018**
(21) Anmeldenummer: 14783778.5
(22) Anmeldetag: 25.09.2014
(51) Int. Cl.: B60G 13/00, B60N 2/50, B60N 2/52, B60G 99/00, F16F 9/18

(54) **FAHRZEUG MIT KRAFTGESTEUERTEM DÄMPFER MIT REGELVENTIL**
VEHICLE WITH FORCE-CONTROLLED SHOCK ABSORBER WITH REGULATING VALVE
VÉHICULE ÉQUIPÉ D'UN AMORTISSEUR CONTROLÉ PAR FORCE POURVU D'UNE SOUPAPE DE RÉGULATION

(30) Priorität: 01.10.2013 DE 102013110924
(43) Veröffentlichungstag der Anmeldung: 10.08.2016
(73) Patentinhaber: GRAMMER AG, 92224 Amberg (DE)
(72) Erfinder: HALLER, Erwin, 92262 Birgland (DE)
(74) Vertreter: Hannke, Christian
(86) Internationale Anmeldenummer: PCT/EP2014/070490
(87) Internationale Veröffentlichungsnummer: WO 2015/049155

(56) Entgegenhaltungen:
- EP-A1- 1 186 467
- EP-A2- 0 322 608
- DE-A1-102005 040 581
- DE-A1-102007 039 215
- DE-A1-102009 022 763
- DE-A1-102011 100 307
- DE-B3-102005 048 949
- DE-U1-202007 013 300
- FR-A- 1 081 491
- US-A- 3 470 692
- US-A1- 2010 072 760

## Beschreibung

Die Erfindung betrifft einen Stoßdämpfer nach dem Oberbegriff des Patentanspruchs 1.

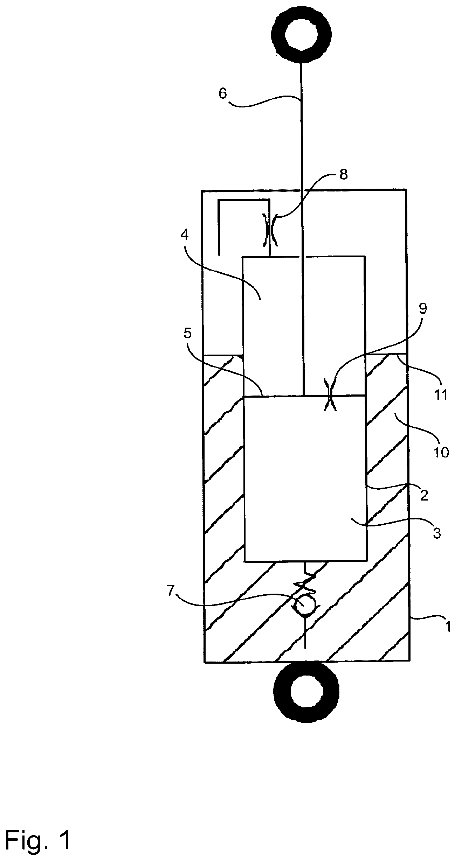

Das Dokument EP0322608 A2 offenbart einen Stoßdämpfer nach dem Oberbegriff des Anspruchs 1. Ein Stoßdämpfer nach dem Oberbegriff des Anspruchs 1 ist beispielhaft in der Figur 1 dargestellt. Dieser Stoßdämpfer nach dem Stand der Technik weist ein Gehäuse mit einem daran angeordneten Innenrohr auf, wobei in das Innenrohr eine Kolbenstange eintaucht, an deren in das Innenrohr eintauchenden Ende ein Kolben angeordnet ist, der das Innere des Innenrohrs in eine untere Kammer und eine obere Kammer teilt. Dabei ist an dem Kolben eine Ventilanordnung angeordnet, mittels welcher ein in dem Innenrohr aufgenommenes Arbeitsmedium beim Verfahren des Kolbens im Innenrohr aus der unteren Kammer in die obere Kammer und umgekehrt strömen kann. Am oberen Ende des Innenrohres ist eine zweite Ventilanordnung angeordnet, mittels welcher das in dem Innenrohr aufgenommene Arbeitsmedium beim Verfahren des Kolbens im Innenrohr aus der oberen Kammer lediglich in das als Tank für das Arbeitsmedium dienende Innere des Gehäuses strömen kann. Schließlich weist das Innenrohr an seinem unteren Ende eine dritte Ventilanordnung auf, mittels welcher das in dem als Tank dienenden Inneren des Gehäuses aufgenommene Arbeitsmedium beim Verfahren des Kolbens im Innenrohr lediglich in die untere Kammer des Innenrohres strömen kann.
Solche Stoßdämpfer nach dem Stand der Technik werden üblicherweise als Zweirohrdämpfer bezeichnet. Derartige Zweirohrdämpfer werden als passive Stoßdämpfer zum Einen als nicht verstellbare und zum Anderen als verstellbare Stoßdämpfer verwendet.

Bei einem nicht verstellbaren Zweirohrdämpfer sind die Eigenschaften des Dämpfers beziehungsweise der Dämpfung fest definiert, sodass der Strömungswiderstand des Arbeitsmediums durch die in dem Dämpfer verwendeten Ventilanordnungen festgelegt ist.

Verstellbare Zweirohrdämpfer werden dann angewendet, wenn die zu leistende Arbeit des Stoßdämpfers an entsprechende Fahrzeugzustände eines Fahrzeuges, in welches ein solcher verstellbarer Zweirohrdämpfer eingebaut ist, beziehungsweise den gefederten, unterschiedlich großen Massen anzupassen ist. Bei solchen passiven, hydraulisch verstellbaren Zweirohrdämpfern wird dies dadurch erreicht, dass der Strömungswiderstand über eine variable Ventilbohrung in der an dem Kolben angeordneten Ventilanordnung zwischen der oberen und der unteren Kammer des Innenrohres des Dämpfers verändert werden kann.

Ein weiteres Merkmal von passiv, nicht verstellbar betriebenen Dämpfern besteht darin, dass die bei einem definierten Arbeitshub ausgetauschte Ölmenge immer gleich ist. Der Strömungswiderstand ist allein von der Geschwindigkeit des Kolbens innerhalb des Innenrohres abhängig.

Bei passiv, verstellbar betriebenen Dämpfern wird bei ebenfalls gleichdefiniertem Hub der Strömungswiderstand zusätzlich zu der Geschwindigkeit des Kolbens durch die Veränderung des Ventilquerschnittes der Ventilanordnung im Kolben beeinflusst. Die ausgetauschte Ölmenge ist bei definiertem Hub ebenfalls gleich.

Nachfolgend wird die Funktionsweise eines solchen Zweirohrdämpfers nach dem Stand der Technik kurz erläutert.

Beim Einfahren des Dämpfers bewegt sich der Kolben im Innenrohr nach unten, sodass die untere Kammer des Innenrohres in ihrem Volumen abnimmt, während die obere Kammer des Innenrohres in ihrem Volumen zunimmt. Bei diesem Einfahren des Dämpfers wird über die Ventilanordnung des Kolbens eine gewisse Menge an Öl, welches hier als Arbeitsmedium dient, von der unteren Kammer in die obere Kammer geleitet, wobei dadurch ein definierter Strömungswiderstand über die Ventilanordnung des Kolbens durch dessen Geschwindigkeit erzeugt wird. Die dabei durch das Eintauchen der Kolbenstange zusätzlich verdrängte Ölmenge in der oberen Kammer des Innerohres wird über die am oberen Ende des Innerohres angeordnete Ventilanordnung in das als Tank für das Arbeitsmedium beziehungsweise Öl dienende Gehäuse abgeleitet.

Wird nun das Ausfahren des Dämpfers initiiert, bewegt sich der Kolben innerhalb des Innenrohres unter Volumenreduzierung der oberen Kammer und Volumenerhöhung der unteren Kammer nach oben, wobei die auszutauschende Menge an Öl beziehungsweise Arbeitsmittel über die Ventilanordnung am oberen Ende des Innerohres von der oberen Kammer in das als Tank für das Arbeitsmedium dienende Innere des Gehäuses beziehungsweise den dortigen Ölsumpf geleitet wird. Die Differenzmenge an Öl beziehungsweise Arbeitsmittel, die durch das Ausfahren der Kolbenstange erforderlich ist, wird über die am Boden des Innenrohres angeordnete Ventilanordnung aus dem als Tank für das Arbeitsmedium dienenden Innere des Gehäuses beziehungsweise dem dortigen Ölsumpf nachgesaugt.

Wie gerade verdeutlicht, bewegt sich das Arbeitsmittel beziehungsweise das Öl innerhalb des Dämpfers in einem Kreislauf.

Dadurch, dass ein solcher Zweirohrdämpfer für seine Anwendung - passiv verstellbar oder passiv nicht verstellbar - entsprechend vorkonfektioniert sein muss, ist es nicht möglich, einen einmal bereitgestellten Dämpfer für einen anderen Anwendungszweck zu verwenden.

Es ist daher Aufgabe der Erfindung, einen Stoßdämpfer der eingangs genannten Art zur Verfügung zu stellen, mit welchem verschiedene Anwendungszwecke realisierbar sind.

Gelöst wird diese Aufgabe durch einen Stoßdämpfer mit den Merkmalen des Patentanspruchs 1. Vorteilhafte Ausgestaltungen des erfindungsgemäßen Stoßdämpfers finden sich in den Unteransprüchen.

Der erfindungsgemäße Stoßdämpfer weist neben den Merkmalen des Oberbegriffs des Patenanspruchs 1 zusätzlich die Merkmale auf, dass zwischen einem ersten Anschlusselement der unteren Kammer des Innenrohres (2) und einem zweiten Anschlusselement an der oberen Kammer des Innenrohres wenigstens ein Proportional-Stromregelventil angeordnet ist.

Durch die erfindungsgemäße Ausgestaltung des Stoßdämpfers ist es möglich, den erfindungsgemäßen Stoßdämpfer nunmehr passiv verstellbar, aktiv verstellbar, semiaktiv verstellbar und über eine entsprechende Ansteuerung des wenigstens einen Proportional-Stromregelventils zur Steuerung des Strömungswiderstandes des Arbeitsmediums in der Ventilanordnung des Kolbens adaptiv zu betreiben.

Solche erfindungsgemäßen Stoßdämpfer können nicht nur in den Radaufhängungen und Federbeinen der unterschiedlichsten Fahrzeuge Verwendung finden. Vielmehr ist es auch möglich, damit Schwingungen von Sitzen, insbesondere von gefederten Fahrzeugsitzen und gefederten Kabinen zu dämpfen. Zudem ist eine Kombination einer Dämpfung einer Kabinenfederung und gefederten Fahrsitze, beispielsweise eines Schienenfahrzeuges denkbar. Auch ist der Einsatz der erfindungsgemäßen Stoßdämpfer nicht auf solche Einsätze beschränkt, sondern kann in allen möglichen Vorrichtungen zum Einsatz kommen, bei denen eine entsprechende Dämpfung von Schwingungen wünschenswert ist.

Durch das wenigstens eine Proportional-Stromregelventil, welches zwischen einer an dem unteren Anschlusselement angeschlossenen Druckleitung und einer an dem oberen Anschlusselement angeschlossenen Druckleitung angeordnet ist, ist es möglich, die Strömungsgeschwindigkeit in den Druckleitungen zwischen dem oberen Anschlusselement und dem Proportional-Stromregelventil und der unteren Druckleitung und dem Proportional-Stromregelventil kontinuierlich zwischen den Zuständen des Proportional-Stromregelventils vollständig geschlossen und vollständig geöffnet zu variieren. Somit ist eine einstellbare kontinuierliche Dämpfung möglich, durch welche nicht nur zwischen einer harten und einer weichen Dämpfung gewählt werden kann, sondern auch zwischen allen Dämpfungswerten dazwischen.

Nach einer ersten vorteilhaften Ausgestaltung der Erfindung ist das wenigstens eine Proportional-Stromregelventil manuell einstellbar ausgebildet, sodass es von einem Benutzer mit der Hand auf einen entsprechenden Wert eingestellt werden kann. Allerdings muss bei einer solchen Ausgestaltung ein neuer Wert immer direkt am Proportional-Stromventil händisch eingestellt werden.

Daher ist es sinnvoll, das wenigstens eine Proportional-Stromregelventil automatisiert, insbesondere elektromotorisch, einstellbar ausgebildet ist. Hiedurch ist eine komfortable Einstellung, gegebenenfalls auch ferngesteuert möglich, ohne dass direkt am Proportional-Stromregelventil Einstellungen vom Benutzer vorgenommen werden müssen.

Insbesondere bei der Verwendung von zwei Proportional-Stromregelventilen ist es ermöglicht, dass die Druckstufe - beim Einfahren des Kolbens in den Stoßdämpfer - und die Zugstufe - beim Ausfahren des Kolbens aus den Stoßdämpfer - nicht nur synchron einstellbar sind, sondern auch separat.

Nach einem anderen Gedanken der Erfindung ist zur Steuerung des Strömungswiderstandes des Arbeitsmediums in der Ventilanordnung des Kolbens zusätzlich ein Hydraulikpumpenantrieb vorgesehen, welcher zwischen einer an dem unteren Anschlusselement angeschlossenen Druckleitung und einer an dem oberen Anschlusselement angeschlossenen Druckleitung angeordnet ist. Über einen solchen Hydraulikpumpenantrieb kann die bei einem definierten Verfahren des Kolbens im Innenrohr ausgetauschte Arbeitsmedium- beziehungsweise Ölmenge erhöht und/oder reduziert werden. Durch diese Ausgestaltung ist es möglich, eine Niveausteuerung des Stoßdämpfers zusätzlich zur Erhöhung beziehungsweise Absenkung der Dämpferkräfte zu erzielen. Insbesondere kann eine solche Ausgestaltung bei einem Sitz, insbesondere bei einem Fahrersitz eines Schienenfahrzeuges, zur Sitzhöhenkorrektur beziehungsweise ansonsten auch für eine temporäre Nivellierung genutzt werden.

Natürlich ist es auch möglich, als Einrichtung zur Steuerung des Strömungswiderstandes des Arbeitsmediums in der Ventilanordnung des Kolbens einen Hydraulikpumpenantrieb in Kombination mit einem Proportional-Stromregelventil, vorzusehen. Hierdurch können die zuvor für die einzelnen Einrichtungen beschriebenen Vorteile und Anwendungsmöglichkeiten in Kombination genutzt werden.

Weiterhin hat es sich als vorteilhaft herausgestellt, dass der Hydraulikpumpenantrieb eine regelbare Pumpe und einen Motor für die Pumpe aufweist.

Da beim Betrieb einer Pumpe immer auch mit entsprechenden Leckagen, insbesondere, wenn mit hohen Drücken gearbeitet wird, gerechnet werden muss, ist zwischen dem als Tank für das Arbeitsmedium dienenden Gehäuse und dem Hydraulikpumpenantrieb, insbesondere der regelbaren Pumpe, eine Leckleitung für das Arbeitsmedium vorgesehen. Durch eine solche Leckleitung kann das an der Pumpe austretende Arbeitsmedium beziehungsweise Öl in den Tank zurückgeführt werden, sodass der Arbeitsmittel- beziehungsweise Ölverbrauch des erfindungsgemäßen Stoßdämpfers reduziert und eine Umweltverschmutzung vermieden ist.

Zum Druckausgleich kann zudem zwischen dem als Tank für das Arbeitsmedium dienenden Gehäuse und der unteren Druckleitung und/oder der oberen Druckleitung eine Nachsaugleitung für das Arbeitsmedium vorgesehen sein. Diese Nachsaugleitung kann zudem über Rückschlagventile von der unteren Druckleitung und/oder der oberen Druckleitung getrennt sein.

Nach einem anderen Gedanken der Erfindung ist es vorgesehen, dass an dem oberen Ende des Innenrohres ein Steigrohr angeordnet ist, welches in das in dem Gehäuse aufgenommenen Arbeitsmedium oder Öl beziehungsweise den Arbeitsmittel- oder Ölsumpf hineinragt und mittels welchem das Arbeitsmedium beziehungsweise Öl aus dem als Tank dienenden Gehäuse in die obere Kammer des Innenrohres überführbar ist. Dieses Steigrohr dient insbesondere dazu, dass bei einem externen Betrieb, bei dem die Arbeitsmittelmenge beziehungsweise Ölmenge zwischen der unteren Kammer und der oberen Kammer über eine Hydraulikpumpe ausgetauscht werden kann, keine Kavitation entsteht. Dadurch ist durch das Steigrohr auch bei Anschluss einer Hydraulikpumpe an die Anschlusselemente der oberen und unteren Kammer ein geschlossener Ölkreislauf gewährleistet.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Stoßdämpfer nach dem Stand der Technik,
- Figur 2:: ein erstes Ausführungsbeispiel eines erfindungsgemäßen Stoßdämpfers,
- Figur 3:: ein zweites Ausführungsbeispiel eines erfindungsgemäßen Stoßdämpfers,
- Figur 4:: ein drittes Ausführungsbeispiel eines erfindungsgemäßen Stoßdämpfers,
- Figur 5:: ein viertes Ausführungsbeispiel eines erfindungsgemäßen Stoßdämpfers,
- Figur 6:: ein fünftes Ausführungsbeispiel eines erfindungsgemäßen Stoßdämpfers und
- Figur 7: einen Fahrzeugsitz mit Federung, in welchen ein erfindungsgemäßer Stoßdämpfer eingebaut ist.

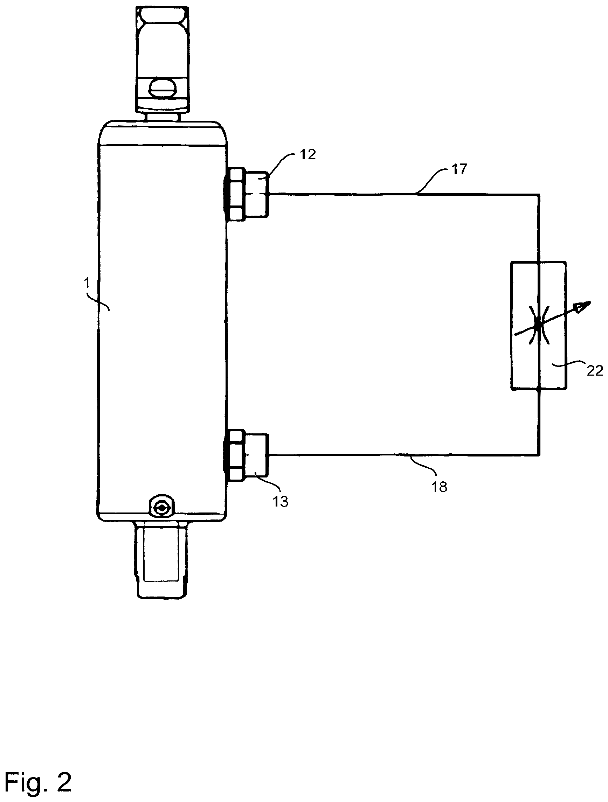

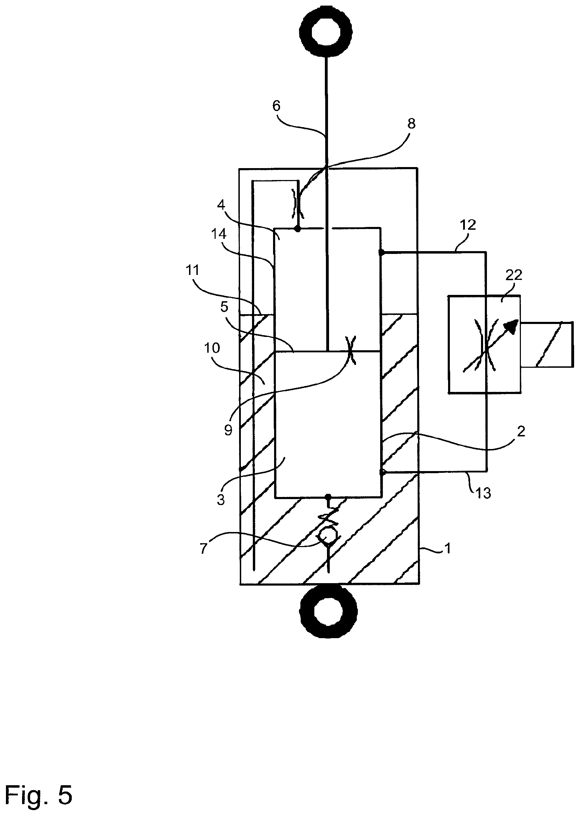

In Figur 2 ist ein erstes Ausführungsbeispiel eines erfindungsgemäßen Stoßdämpfers gezeigt. Der Stoßdämpfer besteht im Wesentlichen aus einem Gehäuse 1, welches rohrförmig ausgebildet ist, in dem ein im Inneren des Gehäuses (1) angeordnetes und hier nicht gezeigtes Innenrohr 2 ortsfest angeordnet ist. Das Gehäuse (1) ist dabei in seinem Inneren prinzipiell so aufgebaut wie das des Standes der Technik gemäß Figur 1 beziehungsweise wie in der Darstellung der Figur 5. In dem Innenrohr 2 ist ein Kolben 5 mittels einer Kolbenstange 6 hin und her verfahrbar, wobei das Innenrohr 2 durch den Kolben 5 in eine obere Kammer 4 und in eine untere Kammer 3 geteilt ist. Das Innenrohr 2 ist dabei vollständig mit einem Arbeitsmedium vorzugsweise mit einem Öl gefüllt. In dem Kolben 5 ist dabei eine erste Ventilanordnung 9 angebracht. Diese Ventilanordnung 9 ist derart ausgestaltet, dass es durch das Öl in beide Richtungen passierbar ist. Da beim Verfahren des Kolbens 5 innerhalb des Innenrohres 2 von oben nach unten durch die Kolbenstange 6 zusätzlich Öl verdrängt wird, muss das Öl Gelegenheit haben, aus der oberen Kammer 4 zu entweichen. Dazu ist an dem oberen Ende des Innenrohres 2 eine zweite Ventilanordnung 8 vorgesehen, durch welche Öl aus der oberen Kammer in den als Tank dienenden Behälter 1 entweichen kann. Die Ventilanordnung 8 ist dabei nur zur Passage des Öls in diese Richtung ausgelegt. Ein Durchtritt von Öl aus dem Behälter 1 in die obere Kammer 4 des Innenrohres 2 ist durch die Ventilanordnung 8 hindurch nicht möglich. Da beim Verfahren des Kolbens 5 innerhalb des Innenrohres 2 von unten nach oben die untere Kammer 3 eine Volumenvergrößerung erfährt, während die obere Kammer eine Volumenreduzierung erfährt, ist am unteren Ende des Innenrohres 2 eine dritte Ventilanordnung 7 vorgesehen. Hierdurch ist es möglich, dass Öl aus dem Behälter 1, in welchem es bevorratet wird, in die untere Kammer 3 des Innenrohres 2 hineintritt, während aufgrund der Volumenreduzierung der oberen Kammer 4 dortiges Öl über die Ventilanordnung 8 in den Behälter 1 gelangt.

Im Gegensatz zum Gehäuse zum Stand der Technik gemäß Figur 1 weist dieses Ausführungsbeispiel an der oberen Kammer 4 des Innenrohres 2 ein Anschlusselement 12 und die untere Kammer 3 des Innenrohres 2 ein Anschlusselement 13 auf.

An die Anschlusselemente 12 und 13 ist als eine Einrichtung zur Steuerung des Strömungswiderstandes des Arbeitsmediums beziehungsweise Öles in der Ventilanordnung 9 am Kolben 5 ein Proportional-Stromregelventil (22) angeschlossen. Das Proportional-Stromregelventil (22) in diesem Ausführungsbeispiel ist manuell einstellbar.

Mittels eines solchen Proportional-Stromregelventils 22 ist es möglich, den Strömungswiderstand des Öls darin in Anhängigkeit von der Stromstärke zu regeln. Insofern ist es hiermit möglich, über dieses Proportional-Stromregelventil 22 die Leistung des Stoßdämpfers und somit die Dämpfung entsprechend den erforderlichen Lastfällen anzupassen. Eine passive Grundeinstellung des Stoßdämpfers ist hierbei als harte Einstellung vorgesehen, wobei der Stoßdämpfer in diesem unbestromten Zustand seine höchste Leistung erbringt. Bei Aktivierung des Proportional-Stromregelventils 22 wird eine Reduzierung der Dämpferkräfte bewirkt, da ein gewisser Anteil des Ölaustausches zwischen der Kammer 3 und der Kammer 4 über die Druckleitungen 17 und 18 und das Proportional-Stromregelventil 22 umgeleitet wird. Je höher die Stromstärke ist, desto mehr Öl kann durch das Proportional-Stromregelventil hindurchfließen, sodass der Stoßdämpfer mit steigender Stromstärke weicher eingestellt wird. Der Stoßdämpfer kann daher sowohl semiaktiv als auch passiv betrieben werden.

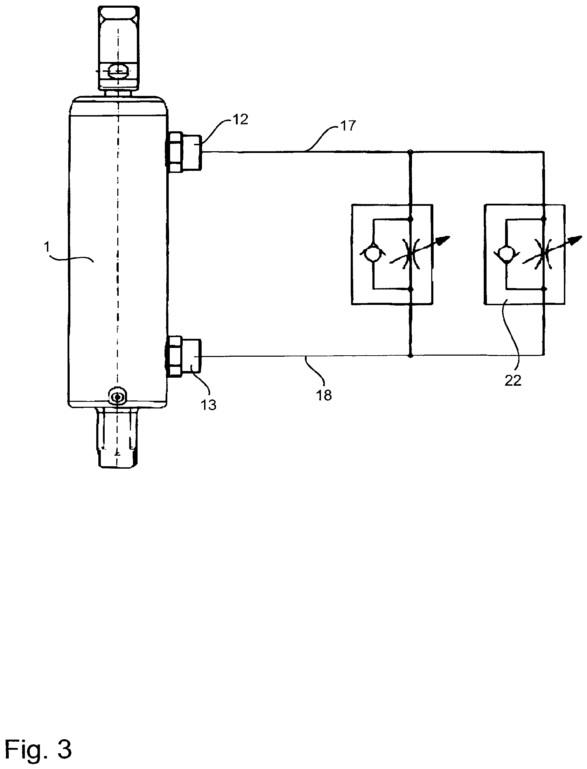

In Figur 3 ist ein weiteres Ausführungsbeispiel eines erfindungsgemäßen Stoßdämpfers gezeigt. Hierbei sind als Einrichtung zur Steuerung des Strömungswiderstandes des Arbeitsmediums in der Ventilanordnung 9 des Kolbens 5 zwei manuell einstellbare Proportional-Stromregelventile (22) vorgesehen, welche zwischen einer an dem unteren Anschlusselement 13 angeschlossenen Druckleitung 18 und einer an dem oberen Anschlusselement 14 angeschlossenen Druckleitung 17 angeordnet sind. Mittels dieser beiden Proportional-Stromregelventilen (22) ist es ermöglicht, dass die Druckstufe - beim Einfahren des Kolbens in den Stoßdämpfer - und die Zugstufe - beim Ausfahren des Kolbens aus dem Stoßdämpfer - nicht nur synchron einstellbar sind, sondern auch separat. Obwohl in diesem Ausführungsbeispiel die beiden Proportional-Stromregelventile (22) manuell einstellbar sind, ist der gleiche Vorteil der synchronen beziehungsweise separaten Einstellmöglichkeit der Zug- beziehungsweise Druckstufe natürlich auch mit automatisiert einstellbaren Proportional-Stromregelventilen (22) erzielbar.

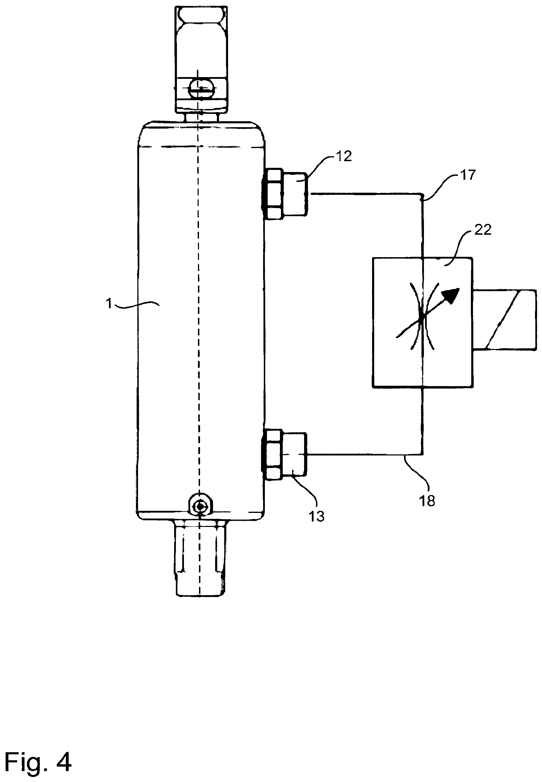

In dem Ausführungsbeispiel gemäß der Figur 4 ist zur Steuerung des Strömungswiderstandes des Arbeitsmediums in der Ventilanordnung 9 des Kolbens 5 ein solches automatisiert, beispielsweise durch einen elektromotorischen Antrieb, einstellbares Proportional-Stromregelventil (22) vorgesehen.

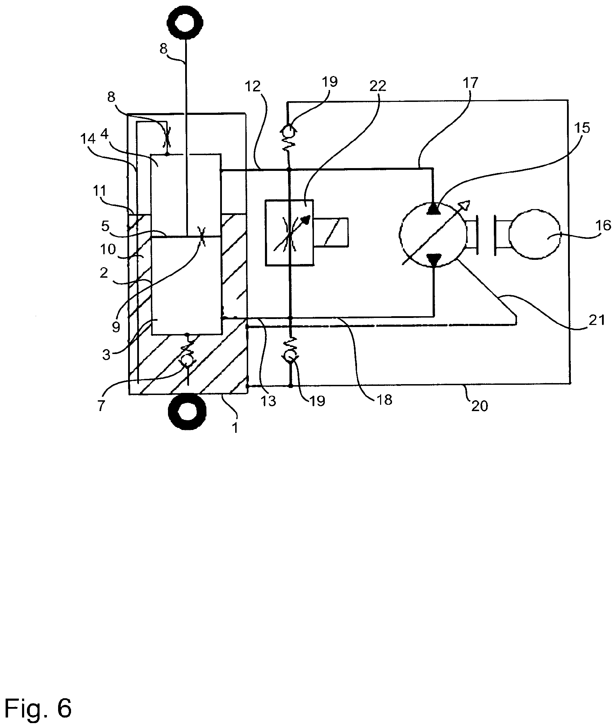

In dem Ausführungsbeispiel gemäß der Figur 6 ist zur Steuerung des Strömungswiderstandes des Arbeitsmediums in der Ventilanordnung 9 des Kolbens 5 zusätzlich zu den einstellbaren Proportional-Stromregelventilen (22) ein Hydraulikpumpenantrieb vorgesehen, der hier vorliegend aus einer regelbaren Pumpe 15 und einem Pumpenmotor 16 besteht. Die Pumpe 15 ist dabei reversierbar ausgebildet, sodass sie Öl sowohl aus der unteren Kammer 3 in die obere Kammer 4 des Innenrohres 2 als auch in umgekehrte Richtung pumpen kann. Mittels einer solchen Pumpe 15 kann die bei einem definierten Hub des Kolbens 5 innerhalb des Innenrohres 2 ausgetauschte Ölmenge zwischen der unteren Kammer 3 und der oberen Kammer 4 erhöht beziehungsweise reduziert werden. Dies bewirkt zum Einen eine Erhöhung/Absenkung der Dämpferkräfte entgegen der Einleitung des Öls, zum Anderen kann mit diesem Ausführungsbeispiel eine Sitzhöhenkorrektur bei einem Einsatz eines solchen Dämpfers an einem Sitz erfolgen, beziehungsweise generell eine temporäre Nivellierung des Stoßdämpfers vorgenommen werden.

Da bei Pumpensystemen auch immer mit einer gewissen Leckrate zu rechnen ist, ist in dem Ausführungsbeispiel gemäß Figur 4 eine Leckleitung 21 vorgesehen, mit welcher aus der Pumpe 15 austretendes Öl wieder in den als Tank für das Öl dienenden Behälter 1 zurückgeführt wird.

Ferner weist dieses Ausführungsbeispiel der Figur 6 auch eine Nachsaugleitung 20 auf, mittels welcher die Pumpe 15 beim Betrieb mit der gegebenenfalls notwendigen Nachsaugölmenge versorgt werden kann. Dabei weist diese Nachsaugleitung 20 Anschlüsse an die Druckleitungen 17 und 18 auf, wobei diese über Rückschlagventile 19 voneinander getrennt sind.

Ferner können auch alle Ausführungsbeispiele der Figuren 2 bis 4 wie die Ausführungsbeispiele der Figuren 5 und 6 ein am oberen Ende des Innenrohres 2 angeordnetes Steigrohr 14 aufweisen, welches über einen Ölsumpfspiegel 11 in den Ölsumpf 10 innerhalb des Behälters 1 hineinragt. Diese Steigleitung 14 dient dazu, dass bei externem Betrieb des Stoßdämpfers, bei dem die Ölmenge zwischen der unteren Kammer 3 und der oberen Kammer 4 über eine Hydraulikpumpe ausgetauscht wird, keine Kavitation entsteht. Solche Kavitationen wären nachteilig für die Arbeitsweise des Stoßdämpfers. Ferner garantiert dieses Steigrohr 14 auch bei externem Betrieb, dass ein geschlossener Ölkreislauf sichergestellt ist.

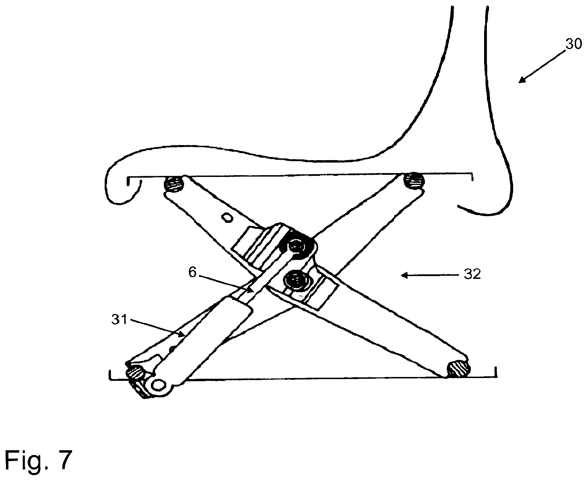

In der Figur 7 ist ein Fahrzeugsitz 30 dargestellt, welcher über eine Federung 32 verfügt, deren Schwingungen mit einem erfindungsgemäßen Stoßdämpfer 31 gedämpft werden.

### Bezugszeichenliste

- 1: Gehäuse
- 2: Innenrohr
- 3: Kammer
- 4: Kammer
- 5: Kolben
- 6: Kolbenstange
- 7: Ventilanordnung
- 8: Ventilanordnung
- 9: Ventilanordnung
- 10: Ölsumpf
- 11: Ölsumpfspiegel
- 12: Anschlusselement
- 13: Anschlusselement
- 14: Steigrohr
- 15: Pumpe
- 16: Motor
- 17: Druckleitung
- 18: Druckleitung
- 19: Rückschlagventil
- 20: Nachsaugleitung
- 21: Leckleitung
- 22: Proportional-Stromregelventil

## Patentansprüche

1. Stoßdämpfer mit:
a) einem Gehäuse (1),
b) einem in dem Gehäuse (1) angeordneten Innenrohr (2),
c) einer in das Innenrohr eintauchenden Kolbenstange (6),
d) einem an dem in das Innenrohr (2) eintauchenden Ende der Kolbenstange (6) angeordneten Kolben (5), der das Innere des Innerohres (2) in eine untere Kammer (3) und eine obere Kammer (4) teilt,
e) einer ersten an dem Kolben (5) angeordneten Ventilanordnung (9), mittels welcher ein in dem Innenrohr (2) aufgenommenes Arbeitsmedium beim Verfahren des Kolbens (5) im Innenrohr (2) aus der unteren Kammer (3) in die obere Kammer (4) und umgekehrt strömen kann,
f) einer zweiten an dem oberen Ende des Innenrohrs (2) angeordneten Ventilanordnung (8),
g) einer dritten an dem unteren Ende des Innenrohrs (2) angeordneten Ventilanordnung (7), wobei mittels der zweiten Ventilanordnung (8) das in dem Innenrohr (2) aufgenommene Arbeitsmedium beim Verfahren des Kolbens (5) im Innenrohr (2) aus der oberen Kammer (4) lediglich in das als Tank für das Arbeitsmedium dienende Innere des Gehäuses (1) strömen kann und mittels der dritten Ventilanordnung (7) das in dem als Tank dienenden Innere des Gehäuses (1) aufgenommene Arbeitsmedium beim Verfahren des Kolbens (5) im Innenrohr (2) aus dem als Tank dienenden Inneren des Gehäuses (1) lediglich in die untere Kammer (3) strömen kann, **dadurch gekennzeichnet, dass** zwischen einem ersten Anschlusselement (13) der unteren Kammer (3) des Innenrohres (2) und einem zweiten Anschlusselement (12) an der oberen Kammer (4) des Innenrohres (2) wenigstens ein Proportional-Stromregelventil (22) angeordnet ist.

2. Stoßdämpfer nach Anspruch 1,
**dadurch gekennzeichnet, dass**
das wenigstens eine Proportional-Stromregelventil (22) manuell einstellbar ist.

3. Stoßdämpfer nach Anspruch 1,
**dadurch gekennzeichnet, dass**
das wenigstens eine Proportional-Stromregelventil (22) automatisiert, insbesondere elektromotorisch, einstellbar ist.

4. Stoßdämpfer nach einem der Ansprüche 1 bis 3,
**dadurch gekennzeichnet, dass**
zwei parallel geschaltete Proportional-Stromregelventile (22) vorgesehen sind.

5. Stoßdämpfer nach einem der vorhergehenden Ansprüche,
**dadurch gekennzeichnet, dass**
zusätzlich zur Steuerung des Strömungswiderstandes des Arbeitsmediums in der ersten Ventilanordnung (9) ein Hydraulikpumpenantrieb in Kombination mit wenigstens einem Proportional-Stromregelventil (22), vorgesehen ist, wobei dieser Hydraulikpumpenantrieb zwischen einer an dem unteren Anschlusselement (13) angeschlossenen Druckleitung (18) und einer an dem oberen Anschlusselement (14) angeschlossenen Druckleitung (17) angeordnet ist.

6. Stoßdämpfer nach Anspruch 5,
**dadurch gekennzeichnet, dass**
der Hydraulikpumpenantrieb eine regelbare Pumpe (15) und einen Motor (16) für die Pumpe (15) aufweist.

7. Stoßdämpfer nach einem der Ansprüche, 5 oder 6
**dadurch gekennzeichnet, dass**
zwischen dem als Tank für das Arbeitsmedium dienenden Gehäuse (1) und dem Hydraulikpumpenantrieb, insbesondere der regelbaren Pumpe (15), eine Leckleitung (21) für das Arbeitsmedium vorgesehen ist.

8. Stoßdämpfer nach einem der vorhergehenden Ansprüche,
**dadurch gekennzeichnet, dass**
zwischen dem als Tank für das Arbeitsmedium dienenden Gehäuse (1) und der unteren Druckleitung (13) und/oder der oberen Druckleitung (14) eine Nachsaugleitung (20) für das Arbeitsmedium vorgesehen ist.

9. Stoßdämpfer nach Anspruch 8,
**dadurch gekennzeichnet, dass**
zwischen der Nachsaugleitung (20) und der unteren Druckleitung (13) und/oder der oberen Druckleitung (14) ein Rückschlagventil (19) angeordnet ist.

10. Stoßdämpfer nach einem der vorhergehenden Ansprüche,
**dadurch gekennzeichnet, dass**
an dem oberen Ende des Innenrohres (2) ein Steigrohr (14) angeordnet ist, welches in das in dem Gehäuse (1) aufgenommene Arbeitsmedium hineinragt und mittels welchem Arbeitsmedium aus dem als Tank dienende Gehäuse (1) in die obere Kammer (4) des Innenrohres (2) überführbar ist.

## Claims

1. Shock absorber comprising:
a) a housing (1),
b) an inner tube (2) arranged in the housing (1),
c) a piston rod (6) that plunges into the inner tube,
d) a piston (5) arranged on the end of the piston rod (6) that plunges into the inner tube (2), which piston divides the inside of the inner tube (2) into a lower chamber (3) and an upper chamber (4),
e) a first valve arrangement (9) arranged on the piston (5), by means of which a working medium received in the inner tube (2) can flow out of the lower chamber (3) into the upper chamber (4) and vice versa when the piston (5) is moved in the inner tube (2),
f) a second valve arrangement (8) arranged on the upper end of the inner tube (2),
g) a third valve arrangement (7) arranged on the lower end of the inner tube (2), it being possible, by means of the second valve arrangement (8), for the working medium received in the inner tube (2) to flow out of the upper chamber (4) only into the inside of the housing (1) used as a tank for the working medium when the piston (5) is moved in the inner tube (2), and it being possible, by means of the third valve arrangement (7), for the working medium received in the inside of the housing (1) used as a tank to flow out of the inside of the housing (1) used as a tank only into the lower chamber (3) when the piston (5) is moved in the inner tube (2), **characterised in that** at least one proportional flow control valve (22) is arranged between a first connection element (13) of the lower chamber (3) of the inner tube (2) and a second connection element (12) at the upper chamber (4) of the inner tube (2).

2. Shock absorber according to claim 1,
**characterised in that**
the at least one proportional flow control valve (22) is manually adjustable.

3. Shock absorber according to claim 1,
**characterised in that**
the at least one proportional flow control valve (22) is adjustable in an automated manner, in particular by means of an electric motor.

4. Shock absorber according to any of claims 1 to 3,
**characterised in that**
two proportional flow control valves (22) that are connected in parallel are provided.

5. Shock absorber according to any of the preceding claims,
**characterised in that**
a hydraulic pump drive in combination with at least one proportional flow control valve (22) is provided in addition for controlling the flow resistance of the working medium in the first valve arrangement (9), said hydraulic pump drive being arranged between a pressure line (18) connected at the lower connection element (13) and a pressure line (17) connected at the upper connection element (14).

6. Shock absorber according to claim 5,
**characterised in that**
the hydraulic pump drive comprises a controllable pump (15) and a motor (16) for the pump (15).

7. Shock absorber according to either claim 5 or claim 6,
**characterised in that**
a leakage line (21) for the working medium is provided between the housing (1) used as a tank for the working medium and the hydraulic pump drive, in particular the controllable pump (15).

8. Shock absorber according to any of the preceding claims,
**characterised in that**
a feed line (20) for the working medium is provided between the housing (1) used as a tank for the working medium and the lower pressure line (13) and/or the upper pressure line (14).

9. Shock absorber according to claim 8,
**characterised in that**
a non-return valve (19) is arranged between the feed line (20) and the lower pressure line (13) and/or the upper pressure line (14).

10. Shock absorber according to any of the preceding claims,
**characterised in that**
a rising pipe (14) is arranged at the upper end of the inner tube (2), which rising pipe protrudes into the working medium received in the housing (1) and by means of which working medium can be transferred from the housing (1) used as a tank into the upper chamber (4) of the inner tube (2).

## Revendications

1. Amortisseur de chocs comportant :
un corps (1) ;
un tube interne (2) disposé dans le corps (1) ;
une tige de piston (6) qui plonge dans le tube interne ;
un piston (5) qui est disposé sur l'extrémité de la tige de piston (6) qui plonge dans le tube interne (2), lequel piston divise l'intérieur du tube interne (2) en une chambre inférieure (3) et une chambre supérieure (4) ;
un premier ensemble soupape (9) qui est disposé sur le piston (5) et au moyen duquel un fluide de travail reçu dans le tube interne (2) peut s'écouler hors de la chambre inférieure (3) dans la chambre supérieure (4) et inversement lors du déplacement du piston (5) dans le tube interne (2) ;
un deuxième ensemble soupape (8) qui est disposé sur l'extrémité supérieure du tube interne (2) ;
un troisième ensemble soupape (7) disposé sur l'extrémité inférieure du tube interne (2) ;
dans lequel, au moyen du deuxième ensemble soupape (8), le fluide de travail reçu dans le tube interne (2) peut, lors du déplacement du piston (5) dans le tube interne (2), s'écouler hors de la chambre supérieure (4) simplement dans l'intérieur du corps (1) servant de réservoir pour le fluide de travail, et, au moyen du troisième ensemble soupape (7), le fluide de travail reçu dans l'intérieur du corps (1) servant de réservoir peut, lors du déplacement du piston (5) dans le tube interne (2), s'écouler hors de l'intérieur du corps (1) servant de réservoir simplement dans la chambre inférieure (3),
**caractérisé par le fait qu'**entre un premier élément de raccordement (13) de la chambre inférieure (3) du tube interne (2) et un deuxième élément de raccordement (12) à la chambre supérieure (4) du tube interne (2) est disposée au moins une soupape de régulation proportionnelle de débit (22).

2. Amortisseur de chocs selon la revendication 1,
**caractérisé par le fait que**
la au moins une soupape de régulation proportionnelle de débit (22) est ajustable manuellement.

3. Amortisseur de chocs selon la revendication 1,
**caractérisé par le fait que**
la au moins une soupape de régulation proportionnelle de débit (22) est ajustable de manière automatisée, en particulier par un moteur électrique.

4. Amortisseur de chocs selon l'une des revendications 1 à 3,
**caractérisé par le fait que**
deux soupapes de régulation proportionnelle de débit (22) montées en parallèle sont prévues.

5. Amortisseur de chocs selon l'une des revendications précédentes,
**caractérisé par le fait que**
il est prévu en outre, pour la commande de la résistance à l'écoulement du fluide de travail dans le premier ensemble soupape (9), un entraînement de pompe hydraulique en combinaison avec au moins une soupape de régulation proportionnelle de débit (22), cet entraînement de pompe hydraulique étant disposé entre un conduite de pression (18) raccordée à l'élément de raccordement inférieur (13) et une conduite de pression (18) raccordée à l'élément de raccordement supérieur (14).

6. Amortisseur de chocs selon la revendication 5,
**caractérisé par le fait que**
l'entraînement de pompe hydraulique présente une pompe réglable (15) et un moteur (16) pour la pompe (15).

7. Amortisseur de chocs selon l'une des revendications 5 ou 6,
**caractérisé par le fait que**
une conduite de fuite (21) pour le fluide de travail est prévue entre le corps (1) servant de réservoir pour le fluide de travail et l'entraînement de pompe hydraulique, en particulier la pompe réglable (15).

8. Amortisseur de chocs selon l'une des revendications précédentes,
**caractérisé par le fait que**
il est prévu une conduite de post-aspiration (20) pour le fluide de travail entre le corps (1) servant de réservoir pour le fluide de travail et la conduite de pression inférieure (13) et/ou la conduite de pression supérieure (14).

9. Amortisseur de chocs selon la revendication 8,
**caractérisé par le fait que**
un clapet anti-retour (19) est disposé entre la conduite de post-aspiration (20) et la conduite de pression inférieure (13) et/ou la conduite de pression supérieure (14).

10. Amortisseur de chocs selon l'une des revendications précédentes,
**caractérisé par le fait que**
sur l'extrémité supérieure du tube interne (2), est disposé un tube montant (14) qui fait saillie dans le fluide de travail reçu dans le corps (1) et au moyen duquel du fluide de travail peut être transféré du corps (1) servant de réservoir dans la chambre supérieure (4) du tube interne (2).
